# NEUE EUROPÄISCHE PATENTSCHRIFT

(11) **EP 3 609 775 B2**
(45) Veröffentlichungstag und Bekanntmachung des Hinweises auf die Entscheidung über den Einspruch: **20.09.2023**
(45) Hinweis auf die Patenterteilung: 29.04.2020
(21) Anmeldenummer: 18749756.5
(22) Anmeldetag: 27.07.2018
(51) Int. Cl.: B62D 65/18

(54) **FERTIGUNGSANLAGE MIT FAHRERLOSEN TRANSPORTFAHRZEUGEN UND VERBESSERTER WERKSTÜCKPOSITIONIERUNG IN DEN FERTIGUNGSSTATIONEN**
MANUFACTURING SYSTEM WITH DRIVERLESS TRANSPORT VEHICLES AND IMPROVED WORKPIECE POSITIONING IN THE MANUFACTURING STATIONS
INSTALLATION DE FABRICATION AVEC VÉHICULES DE TRANSPORT SANS CONDUCTEUR ET POSITIONNEMENT AMÉLIORÉ DES PIÈCES D' UVRE DANS LES STATIONS DE FABRICATION

(30) Priorität: 05.08.2017 DE 102017007420
(43) Veröffentlichungstag der Anmeldung: 19.02.2020
(73) Patentinhaber: Audi AG, 85045 Ingolstadt (DE)
(72) Erfinder: SCHMIDT, Jörg, 85057 Ingolstadt (DE); VEIT, Thorsten, 85072 Eichstätt (DE)
(74) Vertreter: Hofstetter, Schurack & Partner
(86) Internationale Anmeldenummer: PCT/EP2018/070447
(87) Internationale Veröffentlichungsnummer: WO 2019/030023

(56) Entgegenhaltungen:
- EP-A1- 0 285 527
- WO-A1-2016/131968
- WO-A1-2017/089224
- CN-A- 106 425 643
- DE-A1- 10 002 481
- DE-A1-102010 051 789
- DE-A1-102013 000 569
- DE-A1-102016 010 948
- DE-U1-202009 005 644
- DE-U1-202013 005 616
- DE-U1-202016 102 149
- GB-A- 2 439 903
- US-A- 5 347 700
- Wikipedia-Seite "Flurfördergerät* https://web.archive.org/web/20160817193210 /https://de.wikipedia.org/wiki/Flurf%C3%B6 rderger%C3%A4t

## Beschreibung

Die Erfindung betrifft eine Fertigungsanlage bzw. ein Fertigungssystem für die Fertigung, insbesondere Serienfertigung, von Werkstücken, wie insbesondere Kraftfahrzeugen oder Kraftfahrzeugbaugruppen, nach dem Oberbegriff des Patentanspruchs 1.

Im Automobilbau können zur Produktion bzw. Fertigung und insbesondere zur Serienproduktion bzw. Serienfertigung fahrerlose Transportfahrzeuge (FTF) eingesetzt werden, um Werkstückträger zusammen mit darauf angeordneten Werkstücken von einer Fertigungsstation zu einer anderen Fertigungsstation zu transportieren. Mit Hilfe einer übergeordneten Produktionsplanung und -steuerung können die fahrerlosen Transportfahrzeuge die Fertigungsstationen in flexibler Reihenfolge anfahren.

Die DE 10 2013 113 729 A1 beschreibt ein Transportfahrzeug zum Transportieren von Werkstücken bei der Fertigung, insbesondere zum Transportieren von Fahrzeugkarosserien bei der Endmontage von Kraftfahrzeugen. Das Transportfahrzeug ist insbesondere ein selbstfahrendes Transportfahrzeug. Das Transportfahrzeug umfasst insbesondere eine Werkstückaufnahmevorrichtung zur Aufnahme eines Werkstücks, bspw. einer Fahrzeugkarosserie. Die Werkstückaufnahmevorrichtung ist insbesondere an einer Handhabungsvorrichtung des Transportfahrzeugs angeordnet. Die Handhabungsvorrichtung umfasst insbesondere zwei Hubvorrichtungen. Ein an der Werkstückaufnahmevorrichtung angeordnetes Werkstück kann somit angehoben und abgesenkt werden. Das Transportfahrzeug eignet sich insbesondere zur Verwendung in einer Fertigungsanlage zur Fertigung von Werkstücken, insbesondere zur Fertigung von Kraftfahrzeugen. Die Fertigungsanlage umfasst mehrere Fertigungspositionen (Stationen). An diesen sind jeweils ein oder mehrere Fertigungsschritte zur Fertigung der Werkstücke, insbesondere herzustellender Kraftfahrzeuge, durchführbar. Beispielsweise kann eine Boxenfertigung vorgesehen sein. Mittels der Transportfahrzeuge werden die Werkstücke nacheinander mehreren Fertigungspositionen (Stationen) zugeführt.

Die Genauigkeit der Positionierung der Werkstücke in den Fertigungspositionen (Stationen) ist dabei nur im Rahmen der Positioniergenauigkeit der Transportfahrzeuge gegeben.

Eine Aufgabe der Erfindung ist es, in einer Fertigungsanlage betreffender Art die Genauigkeit der Positionierung der Werkstücke in den Fertigungsstationen zu verbessern.

Die Aufgabe wird gelöst durch die erfindungsgemäße Fertigungsanlage mit den Merkmalen des Patentanspruchs 1. Ausgestaltungen und Weiterbildungen der Erfindung ergeben sich aus den abhängigen Patentansprüchen, der nachfolgenden Erfindungsbeschreibung und der Zeichnung.

Die erfindungsgemäße Fertigungsanlage für die Fertigung, insbesondere für die Serienfertigung, von Werkstücken umfasst:
- mehrere Fertigungsstationen bzw. Bearbeitungsstationen, an denen jeweils ein Fertigungsschritt oder mehrere Fertigungsschritte an den Werkstücken durchgeführt werden bzw. durchführbar sind;
- mehrere Träger bzw. Werkstückträger, auf denen die zu fertigenden Werkstücke angeordnet werden bzw. anordenbar sind; und
- mehrere fahrerlose Transportfahrzeuge (FTFe), welche die Werkstückträger von einer Fertigungsstation zu einer anderen Fertigungsstation transportieren und hierbei auch in die Fertigungsstationen einfahren können.

Erfindungsgemäß ist vorgesehen, dass die fahrerlosen Transportfahrzeuge als Unterfahr-Flurförderzeuge ausgebildet sind, welche die Werkstückträger zum Transportieren unterfahren, und dass wenigstens eine der Fertigungsstationen, bei der es auf eine genaue Positionierung des Werkstücks ankommt, mit einer Indexiervorrichtung ausgebildet ist, welche den auf einem eingefahrenen fahrerlosen Transportfahrzeug bzw. Unterfahr-Flurförderzeug befindlichen Werkstückträger zur Fertigungsstation ausrichten kann, insbesondere horizontal ausrichten kann.

Die Werkstücke werden also mittelbar über die Werkstückträger, auf denen diese typischerweise in vorgegebener Lage angeordnet sind, zur Fertigungsstation ausgerichtet, wobei die Fertigungsstation mit geeigneten Mitteln, nämlich einer sogenannten Indexiervorrichtung, ausgebildet ist, welche die Werkstückträger zur Fertigungsstation ausrichtet. Beim Ausrichten kann der Werkstückträger relativ zum fahrerlosen Transportfahrzeug verschoben werden. Somit ist die Positionierungenauigkeit der fahrerlosen Transportfahrzeuge, die typischerweise im Bereich mehrerer Millimeter liegt, für die Ausrichtung der Werkstücke in der betreffenden Fertigungsstation weitgehend unbedeutend.

Bei der erfindungsgemäßen Fertigungsanlage sind die Werkstückträger und die fahrerlosen Transportfahrzeuge, anders als die in der DE 10 2013 113 729 A1 beschriebenen Transportfahrzeuge, separate Objekte. Die fahrerlosen Transportfahrzeuge sind erfindungsgemäß als Unterfahr-Flurförderzeuge ausgebildet, die einen Werkstückträger unterfahren, aufnehmen und transportieren bzw. tragen können. Bevorzugt ist vorgesehen, dass jedes Unterfahr-Flurförderzeug einen einzelnen Werkstückträger aufnehmen und transportieren kann. Die fahrerlosen Transportfahrzeuge bzw. die fahrerlosen Unterfahr-Flurförderzeuge können hierzu mit Hubeinrichtungen oder dergleichen ausgebildet sein. Ferner sind die als Unterfahr-Flurförderzeuge ausgebildeten fahrerlosen Transportfahrzeuge mit eigenen Fahrantrieben ausgebildet, die automatisch gesteuert und berührungslos geführt werden können.

Bei den zu fertigenden Werkstücken kann es sich um herzustellende Kraftfahrzeuge handeln, an denen in der erfindungsgemäßen Fertigungsanlage Fertigungsschritte (hierzu zählen im Rahmen der Erfindung auch Montageschritte und dergleichen) durchgeführt werden. Bei den zu fertigenden Werkstücken kann es sich aber auch um herzustellende Kraftfahrzeugbaugruppen handeln, wie z. B. Rohkarosserien, Getriebe, Motoren und dergleichen, an denen Fertigungsschritte durchgeführt werden.

Erfindungsgemäß sind die fahrerlosen Transportfahrzeuge bzw. die Unterfahr-Flurförderzeuge und die Werkstückträger so beschaffen bzw. ausgebildet, dass die unterfahrenen bzw. von den fahrerlosen Transportfahrzeugen aufgenommenen Werkstückträger die fahrerlosen Transportfahrzeuge überragen, d. h. überstehen bzw. über die Fahrzeugumrisse der fahrerlosen Transportfahrzeuge hinausragen. In den überstehenden bzw. hinausragenden Abschnitten bzw. Bereichen kann ein Werkstückträger, trotz eines darunter befindlichen fahrerlosen Transportfahrzeugs, in einer Fertigungsstation mit der Indexiervorrichtung von unten ausgerichtet werden, sobald diese in die Fertigungsstation eingefahren sind.

Ferner ist es erfindungsgemäß vorgesehen, dass die Werkstückträger (in den überstehenden Abschnitten) mit nach unten weisenden Öffnungen ausgebildet sind und dass die Indexiervorrichtung mehrere vertikal verfahrbare bzw. verstellbare Kegelbolzen umfasst, wobei die Kegelbolzen so von unten in die Öffnungen eingreifen können, dass dadurch der Werkstückträger zur Bearbeitungsstation ausgerichtet wird. Es sind vier Kegelbolzen und am Werkstückträger vier komplementäre Öffnungen vorgesehen.

Die Öffnungen im Werkstückträger sind insbesondere als Kreisöffnungen ausgebildet und können einen Durchmesser von 20 mm bis 50 mm, bevorzugt von 30 mm bis 40 mm, aufweisen. Die Kegelbolzen sind entsprechend ausgebildet.

Die Indexiervorrichtung kann wenigstens einen elektrischen, pneumatischen oder hydraulischen Antrieb für die Kegelbolzen aufweisen, mit dem die vertikalen Verfahr- bzw. Verstellbewegungen erzeugt werden können.

Die Kegelbolzen können auch dazu vorgesehen sei, den Werkstückträgerträger anzuheben. Der Werkstückträgerträger kann z. B. um 1 mm bis 5 mm, bevorzugt um 2 mm bis 3 mm, angehoben werden. Die Kegelbolzen, die Bolzenführungen, der Antrieb und dergleichen sind in geeigneter Weise ausgebildet. Der Werkstückträger kann dadurch soweit angehoben werden, dass während der Werkstückbearbeitung keine Kräfte, insbesondere keine vertikalen Kräfte, in das fahrerlose Transportfahrzeug eingeleitet werden. Stattdessen können die Kräfte über die Kegelbolzen, die in den überstehenden Abschnitten von unten in den Werkstückträger eingreifen, abgestützt werden. Die Kegelbolzen haben insofern nicht nur eine Ausrichtungsfunktion, sondern auch eine Hubfunktion und gegebenenfalls auch eine Abstützfunktion.

Ferner kann vorgesehen sein, dass die Fertigungsstation auch wenigstens eine Abstützvorrichtung aufweist, mit der ein angehobener Werkstückträger von unten abgestützt werden kann, nachdem das fahrerlose Transportfahrzeug aus der Fertigungsstation herausgefahren ist. Mit der Abstützvorrichtung können auch größere Kräfte, insbesondere vertikale Kräfte, während der Werkstückbearbeitung abgestützt werden. Das fahrerlose Transportfahrzeug kann nach der Werkstückbearbeitung wieder einfahren und der Werkstückträger kann darauf abgesetzt werden.

Die Indexiervorrichtung kann in einer nicht beanspruchten Ausgestaltung außerdem dazu ausgebildet sein, einen angehobenen Werkstückträger wieder in der ursprünglichen Position auf dem fahrerlosen Transportfahrzeug abzusetzen. D. h., beim Absetzen kann die ursprüngliche Relativposition zwischen dem Werkstückträger und dem fahrerlosen Transportfahrzeug wieder hergestellt werden.

Bevorzugt weist die Indexiervorrichtung auch wenigstens eine Verriegelungseinrichtung für die Kegelbolzen auf. Die Verriegelungseinrichtung ist insbesondere dazu ausgebildet, die Kegelbolzen in ihrer Position zu arretieren, sobald der Werkstückträger angehoben ist.

Die Erfindung wird nachfolgend mit Bezug auf die Zeichnung näher erläutert. Die in der Zeichnung gezeigten oder nachfolgend erläuterten Merkmale können, auch losgelöst von konkreten Merkmalskombinationen, allgemeine Merkmale der Erfindung sein und die Erfindung entsprechend weiterbilden.
- Fig. 1: zeigt schematisch ein fahrerloses Transportfahrzeug mit einem aufgenommenen Werkstückträger.
- Fig. 2: veranschaulicht schematisch die Ausrichtung des Werkstückträgers aus Fig. 1 in einer Fertigungsstation.

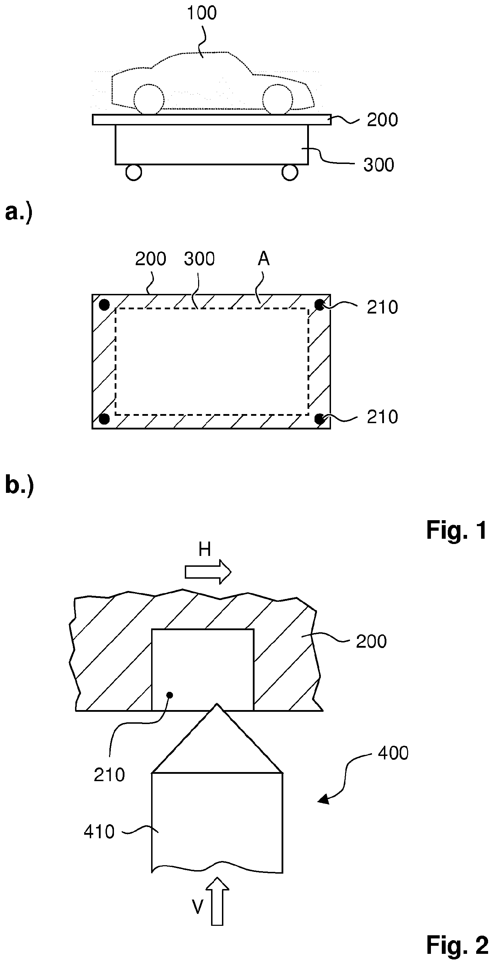

Das in Fig. 1a in einer schematischen Seitenansicht gezeigte fahrerlose Transportfahrzeug (FTF) 300 ist als Unterfahr-Flurförderzeug ausgebildet. Das fahrerlose Transportfahrzeug bzw. Unterfahr-Flurförderzeug 300 kann einen zu transportierenden Werkstückträger 200 unterfahren und aufnehmen. Der Werkstückträger 200 kann eine Plattform, ein Gestell oder dergleichen sein. Auf dem Werkstückträger 200 ist ein Werkstück 100, z. B. ein herzustellendes Kraftfahrzeug, angeordnet.

Innerhalb einer erfindungsgemäßen Fertigungsanlage wird der Werkstückträger 200 zusammen mit dem darauf angeordneten Werkstück 100 mithilfe des fahrerlosen Transportfahrzeugs 300 von einer Fertigungsstation zu einer anderen Fertigungsstation transportiert. Hierbei kann das fahrerlose Transportfahrzeug 300 zusammen mit dem Werkstückträger 200 und dem Werkstück 100 in die Fertigungsstationen einfahren, wo dann am Werkstück 100 Fertigungsschritte durchgeführt werden.

Das fahrerlose Transportfahrzeug bzw. das Unterfahr-Flurförderzeug 300 und der Werkstückträger 200 sind so ausgebildet, dass der aufgenommene Werkstückträger 200 das fahrerlose Transportfahrzeug 300 überragt, d. h. nach vorne, nach hinten und seitlich, das heißt umlaufend, übersteht. Der überstehende Bereiche ist in der in Fig. 1b gezeigten schematischen Draufsicht schraffiert und mit dem Bezugszeichen A bezeichnet. In diesem überstehenden Außenbereich A ist der Werkstückträger 200 in den Ecken mit vier nach unten weisenden Öffnungen 210 ausgebildet.

Wenigstens eine der zur erfindungsgemäßen Fertigungsanlage gehörenden Fertigungsstationen ist mit einer Indexiervorrichtung ausgebildet, die den vom eingefahrenen fahrerlosen Transportfahrzeug 300 aufgenommenen bzw. getragenen Werkstückträger 200 zusammen mit dem darauf angeordneten Werkstück 100 zur Fertigungsstation ausrichtet und dadurch das Werkstück 100 innerhalb der Fertigungsstation möglichst genau positioniert.

Diese Indexiervorrichtung 400 umfasst vier vertikal verfahrbare Kegelbolzen 410, die von unten in die Öffnungen 210 am Werkstückträger 200 eingreifen und dabei aufgrund eines Zentriervorgangs zwischen den Kegelbolzen 410 und den Öffnungen 210 den Werkstückträger 200 horizontal verschieben und zur Fertigungsstation ausrichten. Dies ist für eine der Öffnungen 210 in einer schematischen Schnittansicht in der Fig. 2 gezeigt. Die vertikale Verfahrbewegung des Kegelbolzens 410 ist durch den Pfeil V veranschaulicht und die horizontale Ausrichtungsbewegung des Werkstückträgers 200 ist durch den Pfeil H veranschaulicht. Der gezeigte Kegelbolzen 410 ist als Pinole mit einer nach oben weisenden Kegelspitze ausgebildet. Der Antrieb ist nicht gezeigt.

Ferner kann vorgesehen sein, dass der Werkstückträger 200 mithilfe der in die Öffnungen 210 eingreifenden Kegelbolzen 410 angehoben und dabei insbesondere auch vom fahrerlosen Transportfahrzeug 300 abgehoben wird, wie bereits erläutert. Das Ausrichten und Anheben erfolgt dabei quasi gleichzeitig.

## Patentansprüche

1. Fertigungsanlage für die Fertigung von Werkstücken (100), insbesondere Kraftfahrzeugen oder Kraftfahrzeugbaugruppen, mit:
- mehreren Fertigungsstationen, an denen jeweils ein oder mehrere Fertigungsschritte an den Werkstücken (100) durchgeführt werden;
- mehreren Werkstückträgern (200), auf denen die zu fertigenden Werkstücke (100) angeordnet sind;
- mehreren fahrerlosen Transportfahrzeugen (300), welche die Werkstückträger (200) von einer Fertigungsstation zu einer anderen Fertigungsstation transportieren und hierbei auch in die Fertigungsstationen einfahren;
**dadurch gekennzeichnet,**
**dass** die fahrerlosen Transportfahrzeuge (300) als Unterfahr-Flurförderzeuge ausgebildet sind, welche die Werkstückträger (200) zum Transportieren unterfahren,
**dass** wenigstens eine Fertigungsstation mit einer Indexiervorrichtung (400) ausgebildet ist, welche den auf einem eingefahrenen fahrerlosen Transportfahrzeug (300) befindlichen Werkstückträger (200) zur Fertigungsstation ausrichtet,
**dass** die fahrerlosen Transportfahrzeuge (300) und die Werkstückträger (200) so ausgebildet sind, dass die unterfahrenen Werkstückträger (200) die fahrerlosen Transportfahrzeuge (300) überragen und dadurch mit der Indexiervorrichtung (400) von unten ausgerichtet werden können, wobei der aufgenommene Werkstückträger (200) das fahrerlose Transportfahrzeug (300) umlaufend in einem überstehenden Außenbereich (A) übersteht, und
**dass** die Werkstückträger (200) mit nach unten weisenden Öffnungen (210) ausgebildet sind und die Indexiervorrichtung (400) mehrere vertikal verfahrbare Kegelbolzen (410) umfasst, wobei die Kegelbolzen (410) so von unten in die Öffnungen (210) eingreifen können, dass dadurch der Werkstückträger (200) zur Fertigungsstation ausgerichtet wird, wobei vier Kegelbolzen (410) und am Werkstückträger (200) vier komplementäre Öffnungen (210) als die nach unten weisenden Öffnungen (210) vorgesehen sind, wobei die vier nach unten weisenden Öffnungen (210) in Ecken des überstehenden Außenbereichs (A) ausgebildet sind.

2. Fertigungsanlage nach Anspruch 1,
**dadurch gekennzeichnet,**
**dass** die Öffnungen (210) als Kreisöffnungen mit einem Durchmesser von 30 mm bis 40 mm ausgebildet sind.

3. Fertigungsanlage nach einem der vorhergehenden Ansprüche,
**dadurch gekennzeichnet,**
**dass** die Indexiervorrichtung (400) wenigstens einen elektrischen, pneumatischen oder hydraulischen Antrieb für die Kegelbolzen (410) aufweist.

4. Fertigungsanlage nach einem der vorhergehenden Ansprüche,
**dadurch gekennzeichnet,**
**dass** die Kegelbolzen (410) auch dazu vorgesehen sind, den Werkstückträgerträger (200) anzuheben.

5. Fertigungsanlage nach Anspruch 3,
**dadurch gekennzeichnet,**
die Fertigungsstation eine Abstützvorrichtung aufweist, mit der ein angehobener Werkstückträger (200) von unten abgestützt werden kann, nachdem das fahrerlose Transportfahrzeug (300) aus der Fertigungsstation ausgefahren ist.

6. Fertigungsanlage nach einem der Ansprüche 1 bis 5,
**dadurch gekennzeichnet,**
**dass** die Indexiervorrichtung (400) eine Verriegelungseinrichtung für die vertikal verfahrbaren Kegelbolzen (410) aufweist.

## Claims

1. A manufacturing plant for manufacturing workpieces (100), in particular motor vehicles or motor vehicle assemblies, comprising:
- multiple manufacturing stations, at which one or more manufacturing steps are respectively performed on the workpieces (100);
- multiple workpiece carriers (200), on which the workpieces (100) to be manufactured are arranged;
- multiple driverless transport vehicles (300), which transport the workpiece carriers (200) from one manufacturing station to another manufacturing station and herein also enter the manufacturing stations;
**characterized in**
**that** the driverless transport vehicles (300) are formed as underpinning industrial trucks, which underpin the workpiece carriers (200) for transporting,
**that** at least one manufacturing station is formed with an indexing device (400), which aligns the workpiece carrier (200) located on an entered driverless transport vehicle (300) with the manufacturing station,
**that** the driverless transport vehicles (300) and the workpiece carriers (200) are formed such that the underpinned workpiece carriers (200) protrude beyond the driverless transport vehicles (300) and thereby can be aligned from below with the indexing device (400), wherein the received workpiece carrier (200) protrudes beyond the driverless transport vehicle (300) in circumferential manner in a protruding outer area (A), and
**that** the workpiece carriers (200) are formed with downwards facing openings (210) and the indexing device (400) includes multiple vertically movable tapered bolts (410), wherein the tapered bolts (410) can engage with the openings (210) from below such that the workpiece carrier (200) is thereby aligned with the manufacturing station, wherein four tapered bolts (410) and four complementary openings (210) are provided at the workpiece carrier (200) as the downwards facing openings (210), wherein the four downwards facing openings (210) are formed in corners of the protruding outer area (A).

2. The manufacturing plant according to claim 1,
**characterized in that**
the openings (210) are formed as circular openings with a diameter of 30 mm to 40 mm.

3. The manufacturing plant according to any one of the preceding claims,
**characterized in that**
the indexing device (400) comprises at least one electric, pneumatic or hydraulic drive for the tapered bolts (410).

4. The manufacturing plant according to any one of the preceding claims,
**characterized in that**
the tapered bolts (410) are also intended to lift the workpiece carrier (200).

5. The manufacturing plant according to claim 3,
**characterized in that**
the manufacturing station comprises a supporting device, by which a lifted workpiece carrier (200) can be supported from below, after the driverless transport vehicle (300) has exited the manufacturing station.

6. The manufacturing plant according to any one of claims 1 to 5,
**characterized in that**
the indexing device (400) comprises a locking device for the vertically movable tapered bolts (410).

## Revendications

1. Installation de fabrication pour la fabrication de pièces (100), en particulier de véhicules à moteur ou de sous-ensembles de véhicule à moteur, comportant :
- plusieurs postes de fabrication au niveau desquels une ou plusieurs étapes de fabrication sont respectivement réalisées sur les pièces (100) ;
- plusieurs supports de pièces (200) sur lesquels sont agencées les pièces (100) à fabriquer ;
- plusieurs véhicules de transport (300) sans conducteur qui transportent les supports de pièces (200) d'un poste de fabrication à un autre poste de fabrication et entrent alors également dans les postes de fabrication,
**caractérisée en ce**
**que** les véhicules de transport (300) sans conducteur sont réalisés sous forme de chariots de manutention à positionnement par le dessous qui se positionnent sous les supports de pièces (200) pour le transport,
**qu'**au moins un poste de fabrication est réalisé avec un dispositif d'indexage (400) qui oriente le support de pièce (200) situé sur un véhicule de transport (300) sans conducteur entré, vers le poste de fabrication,
**que** les véhicules de transport (300) sans conducteur et les supports de pièces (200) sont réalisés de telle sorte que les supports de pièces (200) entrés dépassent des véhicules de transport (300) sans conducteur et peuvent ainsi être orientés par le dessous avec le dispositif d'indexation (400), le support de pièces (200) reçu dépassant du véhicule de transport (300) sans conducteur de manière circonférentielle dans une zone extérieure (A) en saillie, et
**que** les supports de pièces (200) sont réalisés avec des ouvertures (210) dirigées vers le bas et le dispositif d'indexation (400) comprend plusieurs boulons à tête sphérique (410) mobiles verticalement, les boulons à tête sphérique (410) pouvant s'engager dans les ouvertures (210) par le dessous, que le support de pièce (200) est orienté vers le poste de fabrication, quatre boulons à tête sphérique (410) étant prévus et quatre ouvertures complémentaires (210) étant prévues sur le support de pièce (200) sous forme d'ouvertures (210) dirigées vers le bas, les quatre ouvertures (210) dirigées vers le bas étant réalisées dans des coins de la zone extérieure (A) en saillie.

2. Installation de fabrication selon la revendication 1,
**caractérisée en ce que**
les ouvertures (210) sont réalisées sous forme d'ouvertures circulaires ayant un diamètre de 30 mm à 40 mm.

3. Installation de fabrication selon l'une des revendications précédentes,
**caractérisée en ce que**
le dispositif d'indexation (400) comporte au moins un entraînement électrique, pneumatique ou hydraulique pour les boulons à tête sphérique (410).

4. Installation de fabrication selon l'une des revendications précédentes,
**caractérisée en ce que**
les boulons à tête sphérique (410) sont également destinés à lever les supports de pièces (200).

5. Installation de fabrication selon la revendication 3,
**caractérisée en ce que**
le poste de fabrication comporte un dispositif d'appui au moyen duquel un support de pièce (200) levé peut être soutenu par le dessous, après quoi le véhicule de transport (300) sans conducteur est sorti du poste de fabrication.

6. Installation de fabrication selon l'une des revendications 1 à 5,
**caractérisée en ce que**
le dispositif d'indexation (400) comporte un dispositif de verrouillage pour les boulons à tête sphérique (410) mobiles verticalement.
